# EUROPEAN PATENT SPECIFICATION

(11) **EP 2 832 229 B1**
(45) Date of publication and mention of the grant of the patent: **08.08.2018**
(21) Application number: 13769305.7
(22) Date of filing: 08.03.2013
(51) Int. Cl.: A23G 3/54, A23G 4/00, A23G 3/34

(54) **TEMPORALLY STABLE IMPROVED THREE-LAYERED CONFECTION**
DREISCHICHTIGES KONFEKT MIT VERLÄNGERTER HALTBARKEIT
CONFISERIE TRICOUCHE À STABILITÉ AMÉLIORÉE DANS LE TEMPS

(30) Priority: 26.03.2012 JP 2012070010
(43) Date of publication of application: 04.02.2015
(73) Proprietor: Lotte Co., Ltd., Tokyo 160-0023 (JP)
(72) Inventor: ITO, Yoko, Saitama-shi Saitama 336-8601 (JP); KOJIMA, Takayuki, Saitama-shi Saitama 336-8601 (JP); OZAKI, Fumihiro, Saitama-shi Saitama 336-8601 (JP)
(74) Representative: Blodig, Wolfgang
(86) International application number: PCT/JP2013/001523
(87) International publication number: WO 2013/145590

(56) References cited:
- EP-A1- 2 316 279
- EP-A2- 0 302 024
- WO-A1-2009/135100
- WO-A1-2010/085623
- WO-A2-2011/084759
- JP-A- H0 646 760
- JP-A- H0 646 760
- JP-A- H1 099 026
- JP-A- H04 179 445
- JP-A- H05 308 905
- JP-A- H05 308 905
- JP-A- 2011 519 563
- JP-A- 2011 519 564
- JP-A- 2011 519 565
- JP-A- 2011 519 566
- JP-A- 2012 024 086
- US-A- 5 437 879
- US-A- 5 437 879
- US-A1- 2009 123 502
- US-A1- 2009 142 443
- "Business & Technology Section", GUM NI YAWARAKA CANDY, JP, 21 July 2011 (2011-07-21), page 23, XP008174940,
- "kraftfoods Press Release", INTERNET CITATION, 19 July 2011 (2011-07-19), pages 1-2, XP008174960, Retrieved from the Internet: URL:http://www.kraftfoodscompany.com/jp/ja /MediaCenter/2011/110719.aspx [retrieved on 2011-07-19]
- GUM NI YAWARAKA CANDY 21 July 2011, page 23, XP008174940
- 'kraftfoods Press Release' 2011, XP008174960 Retrieved from the Internet: <URL:http://www.kraftfoodscompany.com/jp/ja / MediaCenter/2011/110719.aspx> [retrieved on 2013-04-02]

## Description

### [Technical Field]

The present invention relates to a three-layered confectionery product.

### [Background Art]

Multi-layered food products can provide unique properties, particularly when the food contains a different composition in each layer. Various studies have been conducted on the multi-layered food products and methods for producing the same (Patent Literatures 1 to 4).

However, preparation of the multi-layered foods from a composition including various materials poses unique challenges including processing considerations, stability considerations, and consumer acceptance. Moreover, there is a need for new confectionery compositions which provide the desirable advantage of initial burst of flavor in combination with a long lasting flavor profile. Furthermore, there is also a need for new confectionery and chewing gum compositions which provide the desirable advantage of new textural features such as matching or mismatching texture. Moreover, the produced chewing gum has problems of adherence to packing paper due to moisture absorption properties, deterioration of flavor, and the like. Furthermore, it is necessary to secure production suitability in the production of the multi-layered food products.

The multi-layered food products of the conventional arts including Patent Literatures 1 to 4 have not yet solved all the problems described above.

### [Citation List]

### [Patent Literature]

PTL 1: Japanese Patent Application Laid-open No. 2011-519563
PTL 2: Japanese Patent Application Laid-open No. 2011-519564
PTL 3: Japanese Patent Application Laid-open No. 2011-519565
PTL 4: Japanese Patent Application Laid-open No. 2011-519566
US 5437879 A , EP 302024 A2, US 2009/123502 A1, WO 2011/084759 A2, JP H04 179445 A, JP H05 308905 A, "Business & Technology Section" GUM NI YAWARAKA CANDY, JP, 21 July 2011, page 23; "kraftfoods Press Release" http://www.kraftfoodscompany.com/jp/ja/MediaCenter/2011 /110719.asxp; JP H06 46760 A, EP 2316279 A1, US 2009/142443 A1, and WO 2010/085623 A1 disclose multi-layered confectionery product comprising an edible material.

### [Summary of Invention]

### [Technical Problem]

Conventionally, products having an edible material sandwiched between chewing gums have been sold not only in Japan but also overseas; however, when the products are stored for a period of time, moisture absorption occurs even before the expiration date, which leads to problems that the product adheres to the packing paper, have deteriorated flavor, and the like. When the chewing gum or the edible material adhere to the packing paper, it is difficult to take out the product wrapped in the packing paper, and then, the work of peeling off the product from the packing paper is required. Moreover, in the case of stronger adherence, the product can not be peeled off from the packing paper well and a part of the packing paper comes off to adhere strongly to the chewing gum or the edible material, and the product then reaches an inedible state. Furthermore, since stains resulting from colors used in the chewing gum or the edible material adhere to the packing paper, the appearance of the product becomes worse.

### [Solution to Problem]

The present invention relates to multi-layered confectionery which has less moisture absorption and less deteriorated flavor, has no negative effects on the properties of chewing gum such as melting, and can secure production suitability by adjusting the amount of a gelatinizing agent, especially gelatin, in an edible material, especially in a soft candy (1.5 to 6% by weight in the edible material and 1.5 to 10% by weight based on a gum base).

### [Advantageous Effects of Invention]

It is possible to suppress moisture absorption and deterioration of flavor in the multi-layered confectionery, prevent negative effects on the properties of chewing gum such as melting, and secure production suitability.

### [Brief Description of Drawing]

[Fig. 1]

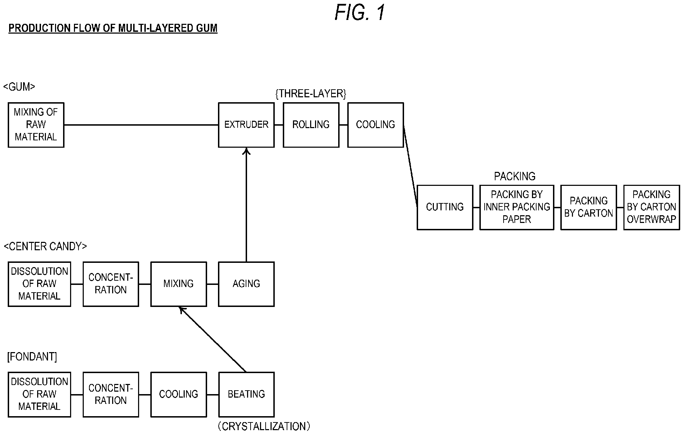

   Fig. 1 is a schematic diagram illustrating a production flow of multi-layered chewing gum according to the present invention.

### [Description of Embodiments]

The present invention relates to three-layered confectionery having an edible material sandwiched between chewing gums according to claims 1 to 7.

In particular, the present invention relates to a three-layered confectionery, wherein the edible material is a soft candy, comprising 1.5 to 6% by weight of gelatin, wherein the edible material comprises 60 to 95% by weight of polyol, wherein the polyol is a crystalline sugar alcohol and a non-crystalline sugar alcohol, the soft candy comprising 30 to 70% by weight of the crystalline sugar alcohol and comprising 30 to 70% by weight of the non-crystalline sugar alcohol, wherein the non-crystalline sugar alcohol is reduced starch syrup.

Furthermore, the present invention relates to the three-layered confectionery described above, comprising 2 to 4% by weight of gelatin.

Furthermore, the present invention relates to the three-layered confectionery described above, in which the amount of gelatin is 1 to 15% by weight based on a gum base.

Furthermore, the present invention relates to the three-layered confectionery described above, which comprises 2 to 4% by weight of gelatin and in which the amount of gelatin is 1.5 to 10% by weight based on the gum base.

Furthermore, the present invention relates to the three-layered confectionery described above, wherein the edible material comprises 5 to 30% of moisture.

Furthermore, the present invention relates to the three-layered confectionery described above, wherein the crystalline sugar alcohol is one or more selected from the group consisting of xylitol, erythritol, sorbitol, and lactitol.

Furthermore, the present invention relates to the three-layered confectionery described above, wherein the crystalline sugar alcohol is xylitol.

As the chewing gum used in the present invention, generally used one can be used. A compounded composition can include a gum base, a carbohydrate, and a flavor. Examples of the carbohydrate that can be used include saccharides such as sugar, sucrose, glucose, fructose, trehalose, and palatinose; sugar alcohols such as xylitol, maltitol, sorbitol, erythritol, lactitol, and reduced palatinose; starch syrup, reduced starch syrup, and maltitol syrup. Moreover, acidulants such as citric acid, malic acid, fumaric acid, and tartaric acid; high intensity sweeteners such as aspartame, acesulfame potassium, sucralose, neotame, and stevia; polysaccharides such as oligosaccharides; softeners such as glycerin; natural colors; artificial colors; and functional materials such as plant extracts can be arbitrarily used as needed. The gum can be produced according to an ordinary method.

The edible material used is a soft candy.

The gelatinizing agent used in the edible material in the present invention is gelatin. The gelatinizing agent gelatin used in the edible material in the present invention is used in an amount of 1.5 to 6% by weight in the edible material and preferably in an amount of 1 to 15% by weight based on the gum base present in the gum combined with the edible material. Furthermore, it is more desirable that the gelatinizing agent used in the edible material in the present invention is used in an amount of 2 to 4% by weight in the edible material and in an amount of 1.5 to 10% by weight based on the gum base present in the gum combined with the edible material.

The polyol used in the edible material in the present invention are crystalline sugar alcohols such as xylitol, erythritol, sorbitol, and lactitol; and the non-crystalline sugar alcohol is reduced starch syrup. The polyol used in the edible material in the present invention is used in an amount of 60 to 95% by weight in the edible material. The crystalline sugar alcohol is used in an amount of 30 to 70% by weight in the edible material and the non-crystalline sugar alcohol is used in an amount of 30 to 70% by weight in the edible material.

Hereinafter, the three-layered confectionery according to the present invention will be further described with Examples, but it should be construed that the present invention is in no way limited to those Examples.

### [Examples]

### (Examples 1 to 4 and Comparative Examples 1 and 2)

Three-layered confectionery comprising gum portions and a soft candy portion having compositions shown in Tables 1 and 2 respectively and, as a whole, composed by the portions having the weights shown in Table 3 was produced.

That is, all the gum portions serving as an upper layer and a lower layer had the same composition as shown in Table 1. The soft candy portions serving as an intermediate layer had varying gelatin amounts: 1.00 (Comparative Example 1), 1.50 (Example 1), 2.00 (Example 2), 4.00 (Example 3), 6.00 (Example 4), and 8.00 (Comparative Example 2) % by weight, as shown in Table 2.

The three-layered gum was produced according to the production flow shown in Fig. 1.

As for the gum portion, raw materials were mixed to form chewing gum having a constant thickness, according to an ordinary method of producing chewing gum.

As for the soft candy portion, raw materials were dissolved and concentrated, and xylitol fondant was then put therein to be mixed, and cooling was performed, to form a soft candy having a constant thickness, according to an ordinary method of producing a soft candy.

The chewing gum having a constant thickness and the soft candy having a constant thickness were arranged so that the chewing gum was placed as the upper layer and the lower layer, and the soft candy was placed as the intermediate layer, and then, rolling and cooling were carried out. After that, cutting was carried out to form three-layered confectionery having a prescribed shape.

The sizes of the gum portion and the soft candy portion after forming were adjusted to 12 mm in the short side and 43 mm in the long side. The thickness of the gum portion was adjusted to 1.2 mm for both of the upper layer and the lower layer, and the thickness of the soft candy portion was adjusted to 1.0 mm.

The three-layered confectionery after forming was packed using silver paper prepared by bonding aluminum and paper. The size of the used silver paper was about three times as large as that of the three-layered confectionery in the short side and was about one and a half as large as that of the three-layered confectionery in the long side.

Packing of the three-layered confectionery was performed by placing the three-layered confectionery on the silver paper so that the long side of the confectionery was directed in the longitudinal direction, folding the silver paper protruding from the long sides in right and left direction along the long sides, and then, folding the silver paper protruding from the short sides in top and bottom direction along the short sides.

Moreover, as reference, three-layered confectionery marketed by another company, which was re-packed by silver paper by the same process as that of the produced three-layered confectionery, was prepared.

For confirming the quality stability of the three-layered confectionery before the expiration date, specifically, for confirming presence or absence of adherence of the three-layered confectionery to the silver paper, presence or absence of melting of the gum, and presence or absence of deterioration of flavor before the expiration date, an accelerated aging test was performed. The three-layered confectionery packed in the silver paper was left for 18 hours at an accelerated aging condition of a high temperature and a high humidity.

For each of the three-layered confectionery after accelerated aging, presence or absence of adherence to the silver paper was evaluated. Moreover, for each of the three-layered confectionery after mastication, trained three expert panelists evaluated whether melting was observed in the mouth and whether deterioration of flavor was observed. Furthermore, whether formation can be easily carried out in the production of the three-layered confectionery without impairing the physical properties of the three-layered confectionery was evaluated. It is noted that the term "melting" here means a state in which gum does not come together and is softened to an un-masticatable state, and breaks to pieces.

Furthermore, the formability in the production of the three-layered confectionery was evaluated in terms of whether the soft candy portion once extended to a prescribed thickness in the rolling step in Fig. 1 could not proceed on to the forming step (cutting step) because the extended portion went back to a thickness close to the thickness before rolling due to the stretching properties (rebound resilience) of the soft candy portion.

The properties of the obtained three-layered confectionery were evaluated based on the following evaluation basis.

### Adherence to silver paper

AA: No adherence is observed.
A: Though adherence is slightly observed and stains resulting from the color are observed, the confectionery can be peeled off from the silver paper.
B: Though adherence is slightly strongly observed and a number of stains resulting from the color are observed, the confectionery can be peeled off from the silver paper.
C: The confectionery can not be peeled off from the silver paper.

### Melting of gum

AA: No melting is observed.
A: Slightly softened but no melting is observed.
B: Considerably softened but no melting is observed.
C: Melting is observed depending on the panelists.

### Flavor

AA: No problem
A: Deterioration of flavor is slightly observed.
B: Deterioration of flavor is observed to a certain degree.
C: Off-taste/off-flavor is strong.

### Formability

A: No problem
B: Expansion or contraction is observed and forming is difficult.
C: Expansion or contraction is largely observed and forming can not be carried out.

The obtained results are shown in Table 5.

### [Table 1]

**Table 1. Gum portion composition (The same composition is employed for all of the upper layers and the lower layers in Examples 1 to 4 and Comparative Examples 1 and 2)**

| Raw material name | Blended ratio % | Explanation of raw material |
|---|---|---|
| Maltitol | 44.00 | |
| Gum base | 35.00 | |
| Erythritol | 6.00 | |
| Mannitol | 7.00 | |
| Sweetener | 1.00 | Aspartame·acesulfame potassium |
| Softener | 1.00 | Gum arabic solution |
| Flavor | 5.00 | |
| Moisture | 0.90 | |
| Color | 0.10 | |
| Total | 100.00 | |

The blended ratios (%) are all represented by % by weight.

### [Table 2]

**Table 2. Soft candy portion (intermediate layer) composition**

| Raw material name | Blended ratio % | | | | | | Explanation of raw material |
|---|---|---|---|---|---|---|---|
| | Comparative Example 1 | Example 1 | Example 2 | Example 3 | Example 4 | Comparative Example 2 | |
| Xylitol | 29.70 | 29.50 | 29.30 | 28.40 | 27.50 | 26.70 | |
| Reduced starch syrup | 50.10 | 49.80 | 49.50 | 48.30 | 47.10 | 45.90 | |
| Plant protein | 0.80 | | | | | | |
| Gum arabic | 4.00 | | | | | | |
| Palm hardened oil | 2.00 | | | | | | |
| Extremely hardened oil | 1.00 | | | | | | |
| Emulsifier | 0.12 | | | | | | Lecithin and sorbitol fatty acid ester |
| Antioxidizing agent | 0.01 | | | | | | |
| Gelatin | 1.00 | 1.50 | 2.00 | 4.00 | 6.00 | 8.00 | |
| Xylitol fondant * | 15.00 | | | | | | One prepared by concentrating xylitol and reduced starch syrup and performing cooling to recrystallize xylitol |
| Color | 0.80 | | | | | | |
| Flavor | 4.00 | | | | | | |
| Final amount of moisture 6.0% * | 100.00 | | | | | | |

| | | | | | | | |
|---|---|---|---|---|---|---|---|
| * It is indicated that the final amount is 100.00% by weight after the raw materials were mixed and concentrated to evaporate moisture in the Table. | | | | | | | |

The blended ratios (%) are all represented by % by weight.

### [Table 3]

**Table 3. Configuration of three-layered chewing gum**

| | Weight |
|---|---|
| Gum portion | 1.5g |
| Soft candy portion | 0.6g |
| Total | 2.1g |

### [Table 4]

**Table 4. *Composition of xylitol fondant**

| Raw material name | Blended ratio % |
|---|---|
| Xylitol | 70.85 |
| Reduced starch syrup | 33.57 |
| Final amount of moisture 6.0% * | 100.00 |

The blended ratios (%) are all represented by % by weight. * It is indicated that the final amount is 100.00% by weight after the raw materials were mixed and concentrated to evaporate moisture in the Table.

### [Table 5]

**Table 5. Evaluation result of three-layered chewing gum after accelerated aging when the amount of gelatin in the soft candy portion is varied**

| | Amount of gelatin in soft candy portion (% by weight) | Adherence to silver paper | Melting of gum | Flavor | Formability |
|---|---|---|---|---|---|
| Comparative Example 1 | 1.00 | C | AA | AA | A |
| Example 1 | 1.50 | B | AA | AA | A |
| Example 2 | 2.00 | A | AA | AA | A |
| Example 3 | 4.00 | AA | A | A | A |
| Example 4 | 6.00 | AA | B | A | B |
| Comparative Example 2 | 8.00 | AA | C | B | C |
| Product marketed by another company | None | C | B | C | None |

The results described above indicated that the produced three-layered confectionery had the following properties.

The three-layered confectionery of Comparative Example 1 has a considerably soft texture at the beginning of mastication, but flavor comes satisfactorily. However, adherence of the three-layered confectionery to the silver paper is strong and can not be peeled off satisfactorily.

The three-layered confectionery of Example 1 has a soft texture at the beginning of mastication, which is harder and firmer than that of Comparative Example 1, and flavor comes satisfactorily.

The three-layered confectionery of Example 2 has a just satisfactory texture (hardness) at the beginning of mastication and flavor comes satisfactorily. A decline in the hardness of the gum is barely observed after some time passes from the beginning of mastication and saliva and the gum are mixed sufficiently (after an intermediate time).

The three-layered confectionery of Example 3 has a just satisfactory texture (hardness) at the beginning of mastication and flavor comes satisfactorily, but a decline in the hardness of the gum is slightly observed after an intermediate time.

The three-layered confectionery of Example 4 has a hard texture at the beginning of mastication and flavor spreads weakly at the beginning. A decline in the hardness of the gum is observed after an intermediate time and gelatin odor is observed.

The three-layered confectionery of Comparative Example 2 has a harder texture than that of Example 4 at the beginning of mastication and flavor spreads poorly at the beginning. A decline in the hardness of the gum is significantly observed after an intermediate time and the gum is melted. Gelatin odor is too strong. Moreover, the extension and contraction of the soft candy portion is too large at the time of rolling and formation can not be satisfactorily carried out.

The three-layered confectionery marketed by another company has a soft texture at the beginning of mastication, stickiness and moisture absorption are considerably observed, and considerably deteriorated odor of flavor is observed. The results described above revealed that, when the amount of gelatin was adjusted to 1.5 to 6% by weight, preferably 2 to 4% by weight in the soft candy portion in the three-layered confectionery, no adherent or slight adherent to the silver paper was observed even after the confectionery was stored for a period of time before the expiration date. Moreover, it was also revealed that the three-layered confectionery described above had no melting of the gum and little deterioration of flavor. Furthermore, it was also revealed that the three-layered confectionery described above had little extension or contraction in the soft candy portion in the production and had satisfactory formability. Accordingly, it has been revealed that three-layered confectionery which has excellent quality that has never been before can be produced.

## Claims

1. Three-layered confectionery comprising an edible material sandwiched between chewing gums,
wherein the edible material is a soft candy and comprises 60 to 95% by weight of polyol, said polyol being a crystalline sugar alcohol and a non-crystalline sugar alcohol, wherein the crystalline sugar alcohol is used in an amount of 30 to 70% by weight in the edible material and the non-crystalline sugar alcohol is used in an amount of 30 to 70% by weight in the edible material, said non-crystalline sugar alcohol being reduced starch syrup, and
the soft candy comprises 1.5 to 6% by weight of gelatin as a gelatinizing agent.

2. The three-layered confectionery according to claim 1, comprising 2 to 4% by weight of the gelatin in the edible material.

3. The three-layered confectionery according to claim 1, in which an amount of gelatin is 1 to 15% by weight based on a gum base.

4. The three-layered confectionery according to claim 2, which comprises 2 to 4% by weight of the gelatin in the edible material and in which an amount of gelatin is 1.5 to 10% by weight based on a gum base.

5. The three-layered confectionery according to claim 1, wherein the edible material comprises 5 to 30% of moisture.

6. The three-layered confectionery according to claim 1, wherein the crystalline sugar alcohol is one or more selected from the group consisting of xylitol, erythritol, sorbitol, and lactitol.

7. The three-layered confectionery according to claim 6, wherein the crystalline sugar alcohol is xylitol.

## Patentansprüche

1. Dreischichtiges Konfekt, umfassend ein essbares Material, das zwischen Kaugummis eingeschlossen ist, wobei das essbare Material ein Kaubonbon ist und 60 bis 95 Gewichtsprozent Polyol umfasst, wobei das Polyol ein kristalliner Zuckeralkohol und ein nicht-kristalliner Zuckeralkohol ist, wobei der kristalline Zuckeralkohol in einer Menge von 30 bis 70 Gewichtsprozent in dem essbaren Material verwendet wird und der nicht-kristalline Zuckeralkohol in einer Menge von 30 bis 70 Gewichtsprozent in dem essbaren Material verwendet wird, wobei der nicht-kristalline Zuckeralkohol ein Sirup aus reduzierter Stärke ist, und wobei das Kaubonbon 1,5 bis 6 Gewichtsprozent Gelatine als Geliermittel umfasst.

2. Dreischichtiges Konfekt nach Anspruch 1, das 2 bis 4 Gewichtsprozent Gelatine in dem essbaren Material umfasst.

3. Dreischichtiges Konfekt nach Anspruch 1, in welchem die Menge an Gelatine 1 bis 15 Gewichtsprozent, basierend auf der Kaugummibasis, beträgt.

4. Dreischichtiges Konfekt nach Anspruch 2, welches 2 bis 4 Gewichtsprozent Gelatine in dem essbaren Material umfasst und in welchem die Menge an Gelatine 1,5 bis 10 Gewichtsprozent, basierend auf der Kaugummibasis, beträgt.

5. Dreischichtiges Konfekt nach Anspruch 1, wobei das essbare Material 5 bis 30 Prozent Feuchtigkeit umfasst.

6. Dreischichtiges Konfekt nach Anspruch 1, wobei der kristalline Zuckeralkohol einer oder mehrere ist, ausgewählt aus der Gruppe, bestehend aus Xylit, Erythrit, Sorbitol und Lactitol.

7. Dreischichtiges Konfekt nach Anspruch 6, wobei der kristalline Zuckeralkohol Xylit ist.

## Revendications

1. Confiserie à trois couches comprenant un matériau comestible pris en sandwich entre des gommes à mâcher,
dans laquelle le matériau comestible est un bonbon tendre et comprend 60 à 95 % en poids de polyol, ledit polyol étant un alcool de sucre cristallin et un alcool de sucre non cristallin, où l'alcool de sucre cristallin est utilisé en une quantité de 30 à 70 % en poids dans le matériau comestible et l'alcool de sucre non cristallin est utilisé en une quantité de 30 à 70 % en poids dans le matériau comestible, ledit alcool de sucre non cristallin étant du sirop d'amidon réduit, et
le bonbon tendre comprend 1,5 à 6 % en poids de gélatine servant d'agent gélatinisant.

2. Confiserie à trois couches selon la revendication 1, comprenant 2 à 4 % en poids de la gélatine dans le matériau comestible.

3. Confiserie à trois couches selon la revendication 1, dans laquelle la quantité de gélatine est de 1 à 15 % en poids par rapport à la base de gomme.

4. Confiserie à trois couches selon la revendication 2, qui comprend 2 à 4 % en poids de la gélatine dans le matériau comestible et dans laquelle la quantité de gélatine est de 1,5 à 10 % en poids par rapport à la base de gomme.

5. Confiserie à trois couches selon la revendication 1, dans laquelle le matériau comestible comprend 5 à 30 % d'humidité.

6. Confiserie à trois couches selon la revendication 1, dans laquelle l'alcool de sucre cristallin est un ou plusieurs choisi (s) dans l'ensemble constitué par le xylitol, l'érythritol, le sorbitol, et le lactitol.

7. Confiserie à trois couches selon la revendication 6, dans laquelle l'alcool de sucre cristallin est le xylitol.
